(19) Europäisches Patentamt
European Patent Office
Office européen des brevets

(11) **EP 2 000 031 A1**

(12) **EUROPÄISCHE PATENTANMELDUNG**

(43) Veröffentlichungstag:
**10.12.2008 Patentblatt 2008/50**

(51) Int Cl.:
***A01N 47/44*** *(2006.01)*   ***A01N 43/54*** *(2006.01)*
***A01N 33/12*** *(2006.01)*   ***C08G 18/00*** *(2006.01)*

(21) Anmeldenummer: **08450002.4**

(22) Anmeldetag: **11.01.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(30) Priorität: **15.05.2007   AT 7522007**

(71) Anmelder: **Recticel Schlafkomfort GmbH -
Schlaraffia
44867 Bochum (DE)**

(72) Erfinder: **Rametsteiner, Karl
4040 Linz (AT)**

(74) Vertreter: **Hübscher, Helmut et al
Spittelwiese 7
4020 Linz (AT)**

(54) **Polyurethan-Werkstoff mit einer bioziden Ausrüstung**

(57) Es wird ein Polyurethan-Werkstoff mit einer bioziden Ausrüstung auf der Basis wenigstens eines kationischen Biozids mit freien primären oder sekundären Amingruppen und/oder freien Hydroxylgruppen beschrieben, wobei zur dauerhaften Biozidausrüstung das kationische Biozid über Urethan- und/oder Ureidbrücken in die Polyurethanmatrix kovalent eingebunden wird.

EP 2 000 031 A1

**Beschreibung**

Die Erfindung bezieht sich auf einen Polyurethan-Werkstoff mit einer bioziden Ausrüstung auf der Basis wenigstens eines kationischen Biozids mit freien primären oder sekundären Amingruppen und/oder freien Hydroxylgruppen.

Kationische Biozide lagern sich aufgrund ihrer positiven Ladung an die eine negative Ladung aufweisende Zellmembran von Bakterien an und zerstören sie. Als kationische Biozide sind polymere Biguanide mit freien primären und sekundären Amingruppen (AT 406 163 B, GB 2 134 783 A, EP 439 699 B1, WO 01/85676 A1) oder Polyäthylenimine mit solchen Amingruppen (US 2005249695 A1), aber auch Biozide bekannt, die freie Hydroxylgruppen aufweisen, wie beispielsweise quaternäre Ammoniumsalze. Diese kationischen Biozide liegen in der Regel als Hydrohalogenide, ionsbesondere Hydrochloride, vor und sind damit sehr gut wasserlöslich. Unabhängig davon, ob sie als Lösung oder ungelöst eingesetzt werden, verbrauchen sich diese Biozide mit der Zeit und nehmen häufig mit unbeabsichtigten Nebenwirkungen Einfluss auf die Umwelt. Aus diesem Grunde eignen sich solche kationischen Biozide nicht für eine dauerhafte biozide Ausrüstung von Gegenständen aus Polyurethan, wie dies verstärkt in unterschiedlichen Bereichen gefordert wird, und zwar nicht nur im sanitären Bereich, sondern beispielsweise auch in der Bauwirtschaft, in der Kühlindustrie, bei der Trinkwasseraufbereitung oder bei Matratzen, Polsterungen und Pflegetüchern sowie bei Bekleidungen, wobei der Polyurethan-Werkstoff in geschäumter, in ungeschäumter Form, aber auch als Elastomer vorliegen kann.

Der Erfindung liegt somit die Aufgabe zugrunde, einen Polyurethan-Werkstoff beliebiger Ausformung so auszurüsten, dass eine gute biozide Wirkung dauerhaft gewährleistet werden kann, ohne eine unbeabsichtigte Beeinflussung der Umwelt in Kauf nehmen zu müssen.

Ausgehend von einem kationischen Biozid der eingangs geschilderten Art löst die Erfindung die gestellte Aufgabe dadurch, dass das kationische Biozid über Urethan- und/oder Ureidbrücken in die Polyurethanmatrix kovalent eingebunden ist.

Der Erfindung liegt die Erkenntnis zugrunde, dass die in Rede stehenden kationischen Biozide mit Hilfe ihrer freien Amin- bzw. Hydroxylgruppen mit der Isocyanatkomponente des Polyurethans eine Urethan- bzw. eine Ureidbindung außerhalb der Polyurethanstruktur eingehen und dabei durch Polyaddition kovalent in die Polyurethanstruktur eingebunden werden. Damit sind die Biozide unlösbar und stabil an die Polymermatrix gebunden, sodass ihre Verflüchtigung beispielsweise durch ein Verdampfen oder Auswaschen ausgeschlossen werden kann. Trotz der unlösbaren Einbindung der Biozide in die Polymermatrix bleibt ihre biozide Wirkung bei einem Kontakt mit Bakterien erhalten, weil durch die sich aufgrund der unterschiedlichen Ladungen der Biozide und der Zellwände der Bakterien elektrostatische Spannungen in der Zellwand aufbauen, die eine Lyse und ein Absterben der Zelle verursachen. Eine gegebene Voraussetzung hiefür ist, dass die biozide Wirkung nicht an die mit der Isocyanatkomponente reaktiven Molekülgruppen gebunden ist und daher die biozid aktiven Molekülgruppen nicht beeinträchtigt sind. Da keine Löslichkeit der Biozide vorliegt, können sich auch keine unbeabsichtigten Auswirkungen auf die Umgebung und keine Interaktionen mit Zellverbunden ergeben.

Als kationisches Biozid mit einer freien Amingruppe kann vorteilhaft ein polymeres Biguanid, aber auch ein Polyimin, vorzugsweise ein Polyäthylenimin mit primären und sekundären Amingruppen, oder eines von dessen N-substituierten Alkylierungs- und Acylierungsderivaten eingesetzt werden. Anstelle polymerer Bakterizide können monomere Biozide, wie Hexamethylen-1,6 bis 4-Chlorphenylbiguanidin oder ein N, N1-(1,10-decandiyldi-1-[4H]pyridinyl-4-yliden) bis (1-octanamin) zum Einsatz kommen.

Als Biozide mit Hydroxylgruppen eignen sich vor allem ein quaternäres Ammoniumsalz, bei dem zumindest einer der vier Alkylreste eine freie Hydroxylgruppe trägt, vorzugsweise ein Dodecyl-methyl-benzyl-methylolammonium oder ein 5-Hydroxy-dodecyl-dimethyl-benzylammonium. Die Biozide dieser Art liegen meist in Form von Hydrohalogeniden vor und können sowohl als feste Hydrohalogenide, aber auch in einer wässrigen oder glykolischen bzw. polyglykolischen Lösung eingesetzt werden. Wässrige Lösungen werden bevorzugt dann Verwendung finden, wenn Wasser im Rahmen der Polyaddition vorgesehen wird, um mit überschüssigem Isocyanat Kohlendioxid als Treibmittel für die Herstellung von Polyurethan-Schaumwerkstoffen zu bilden.

Um das kationische Biozid in die Matrix des Polyurethan-Werkstoffes einzubauen, kann in herkömmlicher Weise eine Polyolkomponente mit einer Isocyanatkomponente in einer Polyaddition zu Polyurethan umgesetzt werden. Es ist jedoch der Polyolkomponente das kationisches Biozid zuzumischen, bevor die Polyolkomponente mit der Isocyanatkomponente reagiert. Allerdings ist für einen bezüglich der Polyaddition zur Polyurethanbildung stöchiometrischen Überschuss der Isocyanatkomponente zu sorgen, um außerhalb der Polyurethanstruktur weitere Additionen mit den Amin- bzw. Hydroxylgruppen der Biozidmoleküle zu ermöglichen und über die dabei gebildeten Urethan- bzw. Ureidbrücken die biozid wirksamen Molekülgruppen an den Polyurethanwerkstoff kovalent anzubinden, die aufgrund der entstehenden Anbindung z. B. über Hexamethylen-, Azamethylen- oder Oxaäthylgruppen eine relativ hohe Beweglichkeit behalten, die notwendig ist, um die Zellwände von Bakterien zu erreichen.

Um sicherzustellen, dass die kationischen Biocide vollständig und kovalent in die Polyurethanmatrix eingebaut werden, ist es notwendig, die üblicherweise als Hydrohalogenide vorliegenden Biozide zu deprotonieren. Dies kann durch stöchiometrische Mengen Akalihydroxide, vorzugsweise in wässriger Lösung, in besonders bevorzugter Form jedoch mittels geeigneter Amine unmittelbar vor der Polyaddition, spätestens jedoch im Zuge der Polyadditionreaktion durchgeführt werden. Als Amine eignen sich hiefür vor allem sekundäre Amine, vorzugsweise mit freien Hydroxylgruppen aus einem Alkylrest, z. B. tertiäres Butyl-Aminoäthanol oder sekundäres Butylaminopopanol, tertiäre Amine, wie Triäthylamin, Diazabicyclooktan, Tetramethylhexandiamin, Dimethylcyclohexylamin, Dimethylaminoäthyläther und Diakylpiperazin, sowie tertiäre Aminoalkohole, beispielsweise Dialkylaminoalkohole, wie Dimethylaminoäthanol, Methyldiethanolamin, Triethanolamin, Piperazin und 1,4-Dialkanol. Die sekundären Amine und tertiären Aminoalkohole reagieren nach ihrer Deprotonisierungsaufgabe mit der Isocyanatkomponente teils über ihre Hydroxylgruppe(n) als Urethane, teils über ihre sekundären Aminogruppe als Ureide. Auf diese Weise werden die Amine und/oder Aminoalkohole selbst kovalent in die Polymermatrix eingebunden und stören weder durch Basizität noch durch Geruch und Reaktivität im Endprodukt.

Zum Deprotonieren eines z. B. als Hydrochlorid vorliegenden Biozids kann darüber hinaus ein Pyrithionsalz, vorzugsweise ein Natriumsalz des Pyrithions, eingesetzt werden. Durch diese Maßnahme wird ein an sich sehr gut wasserlösliches Fungizid kovalent in die Polymerstruktur eingebunden, wobei es trotz der hohen Wasserlöslichkeit zu keinen Auswascheffekten kommt.

Anhand der nachfolgenden, keineswegs einschränkenden Beispiele soll die Erfindung näher erläutert werden.


Beispiel 1:

100 g Polypropylenglykol mit einer durchschnittlichen Hydroxylzahl von 500 mg KOH/g werden zur Entfernung allfälliger Wasserspuren mit 5 g Zeolith (vom Typus Molekularsieb 4 Å) vermischt und gleichzeitig 0,5 g Polyhexamethylenbiguanidindihydrochlorid und 0,3 g tertiäres Butylaminoäthanol-(2) zur Deprotonierung und 0,2 g Diazabicyclooktan als Katalysator versetzt. Nach Homogenisierung durch intensives Rühren wird 132 g Diphenylmethandiisocyanat mit einem NCO-Gehalt von 29,5 - 30,5 % zugesetzt, intensiv gemischt und die cremige Masse sofort auf trockenen Beton gegossen und in einer Schichthöhe von 1 bis 2 mm verteilt. Nach ca. 5 Minuten ist die Polyaddition beendet und eine zähharte, porenfreie Beschichtung mit sehr guter Haftung auf Beton gebildet. Ein kleiner Teil wird auf eine Polyäthylenplatte gegossen, nach der Aushärtung abgelöst und einem Test auf antibakterielle Wirkung unterzogen.

In den in der nachstehenden Tabelle zusammengefassten Beispielen 2 bis 10 wurden geschäumte Polyurethan-Werkstoffe hergestellt. Die Polyolkomponente bestand jeweils aus einer Mischung von 100 g Polypropylenglykol auf Glyzerinbasis mit einem durchschnittlichen Molekulargewicht von 4000, 2 g Polysiloxanol als Zellstabilisator, 0,8 g Diazabicyclooctan als Katalysator und 0,47 g Dibutylzinndilaurat als Co-Katalysator. Die der Polyolkomponente zugegebenen kationischen Biozide und die jeweils eingesetzten Deprotonnierungsmittel sind in der nachfolgenden Tabelle zusammengefasst, wobei mit A ein Dimethylcyclohexylamin, mit B ein tertiäres Butylaminoäthanol-(2) und mit C ein Dimethylaminoäthanol als Deprotonnierungsmittel bezeichnet werden. Als kationische Biozide werden Poly(triäthylenglykol)-biguanidhydrochlorid mit D, Polyhexamethylen(bis)guanidinhydrochlorid mit E, eine Mischung aus Poly(triäthylenglykol)biguanidhydrochlorid und Polyhexamethylen(bis)guanidinhydrochlorid zu gleichen Anteilen mit F, Poly(N-stearyl)-äthylenimin mit G, Hexamethylen-1,6 bis 4-Chlorphenylbiguanidinhydrochlorid mit H, N,N1-(1,10-decandiyldi-1-[4H]pyridinyl-4-yliden) bis (1-octanamin)hydrochlorid mit I, Dodecyl-methyl-benzyl-methylolammoniumhydrochlorid mit J und 5-Hydroxy-dodecyl-dimethyl-benzylammoniumhydrochlorid mit K bezeichnet.

| Beispiel | Biozid | Deprotonierungsmittel Index (NCO:OH) | Diphenylmethan-diisocyanat | Anteil der Biozide | Reaktionszeit |
|---|---|---|---|---|---|
| 2 | 3,58gD (5 % in $H_2O$) | 1,2 g A 103 | 64,88 g | 0,11 % | 125 s |
| 3 | 4,53 g E (25 % in $H_2O$) | 1,2 g A 103 | 64,88 g | 0,68 % | 100 s |
| 4 | 3,78 g D (10 % in $H_2O$) | 1,0 g B 103 | 64,88 g | 0,23 % | 133s |
| 5 | 4,25 g F (20 % in $H_2O$) | 1,8 g C 103 | 64,88 g | 0,51 % | 145 s |
| 6 | 4,36 g G (22 % in $H_2O$) | 1,3gA 103 | 64,88 g | 0,58 % | 129 s |
| 7 | 4,53 g H (25 % in $H_2O$) | 1,8 g C 103 | 64,88 g | 0,68 % | 151 s |

(fortgesetzt)

| Beispiel | Biozid | Deprotonierungsmittel Index (NCO:OH) | Diphenylmethan-diisocyanat | Anteil der Biozide | Reaktionszeit |
|---|---|---|---|---|---|
| 8 | 4,53 g I (25 % in $H_2O$) | 2,0 g B 105 | 66,14 g | 0,68 % | 154 s |
| 9 | 3,78 g J (10 % in $H_2O$) | 3,0 g A 103 | 64,88 g | 0,23 % | 126 s |
| 10 | 4,00 g K (15 % in $H_2O$) | 1,6 g C 103 | 64,88 g | 0,36 % | 145 s |

Als Treibmittel wurde Wasser eingesetzt. Da die Biozide in wässriger Lösung vorgelegt wurden, wurde die Konzentration dieser Lösung zur Einhaltung der Totalwassermenge von jeweils 3,4 g entsprechend gewählt.

Beispiel 11:

Zur Herstellung eines Hartschaumstoffes wurden 100 g Polypropylenglykol auf Sucrosebasis mit einem durchschnittlichen Molekulargewicht von 460 mit 2 g Polysiloxanol als Zellstabilisator, mit 1,2 g Bis-(dimethylaminoäthyl)äther als Deprotonierungsmittel, mit 0,9 g Diazabicyclooktan als Katalysator, mit 0,3 g Dibutylzinnmaleinat als Co-Katalysator, mit 4,5 g Poly-Hexamethylenbiguanidhydrochlorid in einer 20 %igen wässrigen Lösung als Biozid und mit 12 g Cyclopentan als Treibmittel gemischt. Als Isocyanatkomponente wurde 160 g Diphenylmethandiisocyanat mit einem NCO-Gehalt von ca. 30 % eingesetzt. Die vorgemischte Polyolkomponente wurde mit der Isocyanatkomponente während einer Zeitspanne von 20 s intensiv vermengt und in ein Gefäß zur Expansion gegossen. Die Schäumzeit betrug 92 s. Der erhaltene Hartschaumstoff hatte ein Raumgewicht von 33 kg/m$^3$ und einen Anteil an geschlossenen Zellen von > 95 %.

Beispiel 12:

Das Beispiel 9 wurde wiederholt, jedoch mit der Modifikation, dass zur Minimierung einer nachträglichen Verfärbung des Polyurethan-Weichschaumstoffes im direkten Sonnenlicht ein UV-Stabilisator eingesetzt wurde, nämlich ein nanoskaliges $TiO_2$-Rutil, und zwar in einer 50 %igen wässrigen Dispersion mit 7 % eines 2-Amino-2-Methylpropanols als Stabilisator. Die Wassermenge (43 %) sowie der Aminoalkohol wurden als Treibmittel bzw. Deprotonierungsmittel verwendet.

Beispiel 13:

Zur Herstellung eines geschäumten Polyurethan-Werkstoffes wurde eine Polyolkomponente aus einer Mischung von 100 g Polypropylenglykol auf Glyzerinbasis mit einem durchschnittlichen Molekulargewicht von 4000, 2 g Polysiloxanol als Zellstabilisator sowie von 0,8 g Diazabicyclooctan und 0,47 g Dibutylzinndilaurat als Katalysator zunächst mit einer 40 %igen wässrigen Lösung von 2,80 g Polyhexamethylen(bis)guanidinhydrochlorid als Biozid und danach mit 0,80 g Natriumpyrithion in einer 40 %igen wässrigen Lösung als deprotonierendes Fungizid verrührt. Dieses Polyolvorgemisch wurde innerhalb von 20 s intensiv mit 64,88 g Diphenylmethandiisocyanat gemischt und der entstehende Schaumstoff mit einem Raumgewicht von 42 g/dm$^3$ (Reaktionszeit 126 s) und einem Biozid-/Fungizidgehalt von 0,8 % einem Pilzwachstumstest (Methode A) nach ISO 846 unterworfen. Außerdem wurde die fungistatische Wirkung (Methode B) nach ISO 846 bestimmt. Weder nach Methode A noch nach Methode B konne ein Pilzwachstum mikroskopisch festgestellt werden.

Die Prüfung hinsichtlich der antimikrobiellen Aktivität erfolgte gemäß dem japanischen Industriestandart JIS Z 2801:2000 ("Antimicrobial products - Test for antimicrobial activity and efficacy"). Als Testbakterien wurden Escherichia coli (DSM 787) und Staphylococcus aureus (DSM 346) verwendet.

Für den Test wurden aus den verschiedenen Polyurethan-Werkstoffen Probekörper im Ausmaß von 2,5 x 25 x 5 cm hergestellt und einzeln in verschließbaren Zentrifugenröhrchen platziert. In einem ersten Schritt wurden die Probekörper mit 6 ml Bakteriensuspension, welche die ausgewählten Testkeime in bekannter Menge enthielten, beimpft. Die Keime waren in einem dafür geeigneten Nährmedium suspendiert. Die beimpften Proben wurden in den verschlossenen Zentrifugenröhrchen (Luftfeuchtigkeit 90 %) bei einer Temperatur von 23° C für 24 Stunden gelagert. Nach der Inkubation wurde die Bakteriensuspension unter sterilen Bedingungen wieder aus den Proben extrahiert. In den gewonnenen Extrakten wurde anschließend die Anzahl der lebenden Keime (Bakterien) ermittelt und der ursprünglichen, vor der Inkubation auf die Proben aufgebrachten Keimzahl gegenübergestellt.

Für die Bestimmung der Anzahl lebender Keime in den Extrakten wurden diese in verschiedenen Stufen verdünnt, auf geeignete Nährböden aufgebracht und bei 35° C für 2 Tage inkubiert. Nach der Inkubation erfolgte die Auszählung der auf den Nährböden gewachsenen Bakterienkolonien und darauf basierend die Berechnung der in den Probeextrakten vorhandenen lebenden Keime.

Die Gegenüberstellung der in den Extrakten aus den antimikrobiell ausgerüsteten Proben ermittelten Keimzahlen und der im Extrakt einer Probe aus einem nicht erfindungsgemäß mit einem Biozid ausgerüsteten Polyurethan-Werkstoff gefundenen Keimzahl zeigte die Wirksamkeit der Ausrüstung. Ist die in den Probenextrakten ermittelte Keimzahl deutlich geringer als im Extrakt der Vergleichsprobe, so kam es infolge der antimikrobiellen Ausrüstung zum Absterben von Keimen während der Inkubation der beimpften Probe.

Quantifizieren lässt sich die Wirksamkeit einer antimikrobiellen Ausrüstung mit Hilfe der sogenannten Reduktionszahl, die sich gemäß folgender Formel berechnet:

$$IR = [\log(B/A) - \log(C/A)]$$

R:  Wert der antimikrobiellen Aktivität

A:  Lebendkeimzahlen an den Teststücken direkt nach dem Beimpfen

B:  Lebendkeimzahlen am wirkstofffreien Vergleichsmuster nach 24 h Inkubation

C:  Lebendkeimzahlen am wirkstoffhältigen Teststück nach 24 h Inkubation

Zur Überprüfung der Eluierbarkeit der in die Proben eingearbeiteten Ausrüstungen wurden die Proben einem Auswaschprozess unterzogen. Dabei wurden die Proben im Verhältnis der Probe zum Eluierungsmittel von 1 : 10 mit Reinstwasser überschichtet, für eine Minute stehen gelassen und danach ausgepresst. Dieser Vorgang wurde 3-Mal wiederholt, anschließend wurden die Proben im Trockenschrank bei 40° C getrocknet.

Die ausgewaschenen, trockenen Proben wurden ebenfalls dem oben beschriebenen Test auf antimikrobielle Wirksamkeit unterzogen.

Mit einem Reduktionsfaktor von 2 ist eine deutlich antimikrobielle Wirkung der bewerteten Proben gegeben.

Unter diesem Gesichtspunkt konnte mit den Testbakterien Escherichia Coli (DSM 787) und Staphylococcus aureus (DSM 346) an allen geprüften, antimikrobiell ausgerüsteten Proben im Vergleich zu einer nicht erfindungsgemäß ausgerüsteten Probe eine deutliche antimikrobielle Aktivität festgestellt werden, wie dies die nachfolgende Tabelle zeigt.

Für die nicht ausgerüstete Vergleichsprobe wurde ein Weichschaumstoff eingesetzt, der in an sich bekannter Weise mit 0,3 % Silberziolith bakterizid eingestellt wurde. Es wurde überraschend gefunden, dass die erfindungsgemäße Ausrüstung der Proben im Vergleich zur herkömmlich ausgerüsteten Probe eine bis zu mehrtausendfache Wirkung zeigte. Die Untersuchungen ergaben außerdem, dass sich durch die Auswaschung der Silberionen bei der Vergleichsprobe sich die Reduktionszahl verringerte.

In der nachstehenden Tabelle sind die für die Berechnung der Reduktionszahl erforderlichen Keimzahlen A, B und C in koloniebildende Einheiten je ml (KBE) angegeben.

| | Staphylococcus aureus | | Escherichia coli | |
|---|---|---|---|---|
| | nicht eluiert | eluiert | nicht eluiert | eluiert |
| Beispiel 1: | | | | |
| A-Wert [KBE/Probe] | 4,00 E+05 | 9,00 E+05 | 1,40 E+05 | 1,40 E+06 |
| B-Wert [KBE/Probe] | 3,00 E+04 | 3,60 E+05 | 1,00 E+04 | 3,80 E+05 |
| C-Wert [KBE/Probe] | 1,00 E+01 | 1,00 E+01 | 3,00 E+01 | 1,40 E+02 |
| R-Wert [KBE/Probe] | 3,5 | 4,6 | 2,5 | 3,4 |

(fortgesetzt)

| Beispiel 2 | | | | |
|---|---|---|---|---|
| A-Wert [KBE/Probe] | 4,00 E+05 | 9,00 E+05 | 1,40 E+05 | 1,40 E+06 |
| B-Wert [KBE/Probe] | 3,00 E+04 | 3,60 E+05 | 1,00 E+04 | 3,80 E+05 |
| C-Wert [KBE/Probe] | 3,60 E+02 | 1,00 E+01 | 2,00 E+02 | 1,00 E+02 |
| R-Wert [KBE/Probe] | 1,9 | 4,6 | 1,7 | 3,6 |
| Beispiel 3: | | | | |
| A-Wert [KBE/Probe] | 4,00 E+05 | 9,00 E+05 | 1,40 E+05 | 1,40 E+06 |
| B-Wert [KBE/Probe] | 3,00 E+04 | 3,60 E+05 | 1,00 E+04 | 3,80 E+05 |
| C-Wert [KBE/Probe] | < 1,00 E+01 | < 1,00 E+01 | < 1,00 E+01 | <1,00 E+01 |
| R-Wert [KBE/Probe] | > 3,5 | > 4,6 | > 3 | > 4,6 |
| Beispiel 4: | | | | |
| A-Wert [KBE/Probe] | 4,00 E+05 | 9,00 E+05 | 1,40 E+05 | 1,40 E+06 |
| B-Wert [KBE/Probe] | 3,00 E+04 | 3,60 E+05 | 1,00 E+04 | 3,80 E+05 |
| C-Wert [KBE/Probe] | 2,00 E+02 | 5,00 E+02 | 3,00 E+01 | 1,40 E+02 |
| R-Wert [KBE/Probe] | 2,2 | 2,9 | 2,5 | 3,4 |
| Beispiel 5: | | | | |
| A-Wert [KBE/Probe] | 4,00 E+05 | 9,00 E+05 | 1,40 E+05 | 1,40 E+06 |
| B-Wert [KBE/Probe] | 3,00 E+04 | 3,60 E+05 | 1,00 E+04 | 3,80 E+05 |
| C-Wert [KBE/Probe] | 1,00 E+01 | < 1,00 E+01 | < 1,00 E+01 | < 1,00 E+01 |
| R-Wert [KBE/Probe] | 3,5 | > 4,6 | > 3 | > 4,6 |
| Beispiel 6: | | | | |
| A-Wert [KBE/Probe] | 4,00 E+05 | 9,00 E+05 | 1,40 E+05 | 1,40 E+06 |
| B-Wert [KBE/Probe] | 3,00 E+04 | 3,60 E+05 | 1,00 E+04 | 3,80 E+05 |
| C-Wert [KBE/Probe] | 3,00 E+01 | 1,00 E+01 | < 1,00 E+01 | 1,00 E+01 |
| R-Wert [KBE/Probe] | 3,0 | 4,6 | > 3 | |
| Beispiel 7: | | | | |
| A-Wert [KBE/Probe] | 4,00 E+05 | 9,00 E+05 | 1,40 E+05 | 1,40 E+06 |
| B-Wert [KBE/Probe] | 3,00 E+04 | 3,60 E+05 | 1,00 E+04 | 3,80 E+05 |
| C-Wert [KBE/Probe] | 1,00 E+02 | 1,00 E+01 | < 1,00 E+01 | 1,00 E+02 |
| R-Wert [KBE/Probe] | 2,5 | 4,6 | > 3 | 4,6 |
| Beispiel 8: | | | | |
| A-Wert [KBE/Probej | 4,00 E+05 | 9,00 E+05 | 1,40 E+05 | 1,40 E+06 |
| B-Wert [KBE/Probe] | 3,00 E+04 | 3,60 E+05 | 1,00 AS | 3,80 E+05 |

**EP 2 000 031 A1**

(fortgesetzt)

| Beispiel 8: | | | | |
|---|---|---|---|---|
| C-Wert [KBE/Probe] | 3,00 AS | 1,00 E+01 | < 1,00 E+01 | < 1,00 E+01 |
| R-Wert [KBE/Probe] | 3,0 | 4,6 | >3 | > 4,6 |
| Beispiel 9: | | | | |
| A-Wert [KBE/Probe] | 4,00 E+05 | 9,00 E+05 | 1,40 E+05 | 1,40 E+06 |
| B-Wert [KBE/Probe] | 3,00 E+04 | 3,60 E+05 | 1,00 E+04 | 3,80 E+05 |
| C-Wert [KBE/Probe] | 1,00 E+01 | 1,00 E+01 | < 1,00 E+01 | < 1,00 E+01 |
| R-Wert [KBE/Probe] | > 3,5 | > 4,6 | > 3 | > 4,6 |
| Beispiel 10: | | | | |
| A-Wert [KBE/Probe] | 4,00 E+05 | 9,00 E+05 | 1,40 E+05 | 1,40 E+06 |
| B-Wert [KBE/Probe] | 3,00 E+04 | 3,60 E+05 | 1,00 E+04 | 3,80 E+05 |
| C-Wert [KBE/Probe] | 3,00 E+01 | 1,00 E+01 | < 1,00 E+01 | 1,00 E+01 |
| R-Wert [KBE/Probe] | 3,0 | 4,6 | > 3 | 4,6 |
| Beispiel 11: | | | | |
| A-Wert [KBE/Probe] | 4,00 E+05 | 9,00 E+05 | 1,40 E+05 | 1,40 E+06 |
| B-Wert [KBE/Probe] | 3,00 E+04 | 3,60 E+05 | 1,00 E+04 | 3,80 E+05 |
| C-Wert [KBE/Probe] | 2,00 E+02 | 5,00 E+02 | 3,00 E+01 | 1,40 E+02 |
| R-Wert [KBE/Probe] | 2,2 | 2,9 | 2,5 | 3,4 |
| Beispiel 12: | | | | |
| A-Wert [KBE/Probe] | 4,00 E+05 | 9,00 E+05 | 1,40 E+05 | 1,40 E+06 |
| B-Wert [KBE/Probe] | 3,00 E+04 | 3,60 E+05 | 1,00 E+04 | 3,80 E+05 |
| C-Wert [KBE/Probe] | 1,00 E+01 | 1,00 E+01 | < 1,00 E+01 | < 1,00 E+01 |
| R-Wert [KBE/Probe] | > 3,5 | > 4,6 | > 3 | > 4,6 |
| Beispiel 13: | | | | |
| A-Wert [KBE/Probe] | 4,00 E+05 | 9,00 E+05 | 1,40 E+05 | 1,40 E+06 |
| B-Wert [KBE/Probe] | 3,00 E+04 | 3,60 E+05 | 1,00 E+04 | 3,80 E+05 |
| C-Wert [KBE/Probe] | 1,00 E+01 | <1,00 E+01 | < 1,00 E+01 | < 1,00 E+01 |
| R-Wert [KBE/Probe] | > 3,5 | > 4,6 | > 3 | > 4,6 |
| Vergleichsbeispiel: | | | | |
| A-Wert [KBE/Probe] | 9,00 E+05 | 9,00 E+05 | 1,15 E+06 | 1,40 E+06 |
| B-Wert [KBE/Probe] | 6,00 E+04 | 3,60 E+05 | 1,10 E+06 | 3,80 E+05 |
| C-Wert [KBE/Probe] | 3,00 E+04 | 1,60 E+05 | 1,40 E+06 | 8,00 E+05 |
| R-Wert [KBE/Probe] | 0,6 | 0,4 | -0,1 | -0,3 |

**Patentansprüche**

1. Polyurethan-Werkstoff mit einer bioziden Ausrüstung auf der Basis wenigstens eines kationischen Biozids mit freien primären oder sekundären Amingruppen und/oder freien Hydroxylgruppen, **dadurch gekennzeichnet, dass** das kationische Biozid über Urethan- und/oder Ureidbrücken in die Polyurethanmatrix kovalent eingebunden ist.

2. Polyurethan-Werkstoff nach Anspruch 1, **dadurch gekennzeichnet, dass** als kationisches Biozid ein polymeres Biguanid eingesetzt ist.

3. Polyurethan-Werkstoff nach Anspruch 1, **dadurch gekennzeichnet, dass** als kationisches Biozid ein Polyimin, vorzugsweise ein Polyäthylenimin mit primären und sekundären Amingruppen, oder eines von dessen N-substituierten Alkylierungs- und Acylierungsderivaten eingesetzt ist

4. Polyurethan-Werkstoff nach Anspruch 1, **dadurch gekennzeichnet, dass** als kationisches Biozid ein monomeres Bakterizid, vorzugsweise ein Hexamethylen-1,6 bis 4-Chlorphenylbiguanidin oder ein N,N1-(1,10-decandiyldi-1-[4H] pyridinyl-4-yliden) bis (1-octanamin) eingesetzt ist.

5. Polyurethan-Werkstoff nach Anspruch 1, **dadurch gekennzeichnet, dass** als kationisches Biozid ein quaternäres Ammoniumsalz, bei dem zumindest einer der vier Alkylreste eine freie Hydroxylgruppe trägt, vorzugsweise ein Dodecyl-methyl-benzyl-methylolammonium oder ein 5-Hydroxy-dodecyl-dimethyl-benzylammonium, eingesetzt ist.

6. Verfahren zur bioziden Ausrüstung eines Polyurethanwerkstoffes mit einem kationischen Biozid, das freie primäre oder sekundäre Amingruppen und/oder freie Hydroxylgruppen enthält, wobei eine Polyolkomponente mit einer Isocyanatkomponente in einer Polyaddition zu einem Polyurethan-Werkstoff umgesetzt wird, **dadurch gekennzeichnet, dass** der Polyolkomponente das kationisches Biozid zugemischt wird, bevor die Polyolkomponente mit der Isocyanatkomponente reagiert, die in einem bezüglich der Polyaddition zur Polyurethanbildung stöchiometrischen Überschuss zugefügt wird.

7. Verfahren nach Anspruch 6, **dadurch gekennzeichnet, dass** das in Form eines Hydrohalogenids, insbesondere eines Hydrochlorids, vorliegende Biozid deprotoniert wird.

8. Verfahren nach Anspruch 7, **dadurch gekennzeichnet, dass** das Biozid mit Hilfe eines sekundären oder tertiären Amins oder tertiären Aminoalkohols unmittelbar vor der Polyaddition, spätestens jedoch im Zuge der Polyadditionsreaktion deprotoniert wird.

9. Verfahren nach Anspruch 7, **dadurch gekennzeichnet, dass** das Biozid mit Hilfe eines Pyrithionsalzes, vorzugsweise des Natriumsalzes des Pyrithions, deprotoniert wird.

**Europäisches Patentamt**

## EUROPÄISCHER RECHERCHENBERICHT

Nummer der Anmeldung

EP 08 45 0002

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 00/65915 A (BIOINTERACTIONS LTD [GB]; LUTHRA AJAY KUMAR [GB]; SANDHU SHIVPAL SINGH) 9. November 2000 (2000-11-09) * das ganze Dokument * ----- | 1-9 | INV. A01N47/44 A01N43/54 A01N33/12 C08G18/00 |
| X | WO 2007/024973 A (QUICK MED TECHNOLOGIES INC [US]; TOREKI WILLIAM [US]; OLDERMAN GERALD) 1. März 2007 (2007-03-01) * das ganze Dokument * ----- | 1-9 | |
| X | WO 97/29778 A (SANTERRE J PAUL [CA]; MITTELMAN MARC W [CA]) 21. August 1997 (1997-08-21) * das ganze Dokument * ----- | 1-9 | |
| X | WO 99/33344 A (HYDROMER INC [US]) 8. Juli 1999 (1999-07-08) * das ganze Dokument * ----- | 1-9 | |
| X | US 3 898 336 A (REMBAUM ALAN ET AL) 5. August 1975 (1975-08-05) * das ganze Dokument * ----- | 1-9 | RECHERCHIERTE SACHGEBIETE (IPC) |
| X | WO 03/095431 A (UNIV AUBURN [US]; VANSON HALOSOURCE INC [US]; WORLEY SHELBY D [US]; LI) 20. November 2003 (2003-11-20) * das ganze Dokument * ----- | 1-9 | A01N C08G |

Der vorliegende Recherchenbericht wurde für alle Patentansprüche erstellt

| Recherchenort | Abschlußdatum der Recherche | Prüfer |
|---|---|---|
| München | 1. Oktober 2008 | Bertrand, Franck |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 45 0002

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-10-2008

| Im Recherchenbericht angeführtes Patentdokument | Datum der Veröffentlichung | Mitglied(er) der Patentfamilie | Datum der Veröffentlichung |
|---|---|---|---|
| WO 0065915 A | 09-11-2000 | AT 234560 T | 15-04-2003 |
| | | AU 768960 B2 | 08-01-2004 |
| | | AU 4422100 A | 17-11-2000 |
| | | CA 2372030 A1 | 09-11-2000 |
| | | DE 60001728 D1 | 24-04-2003 |
| | | DE 60001728 T2 | 18-03-2004 |
| | | DK 1175148 T3 | 21-07-2003 |
| | | EP 1175148 A1 | 30-01-2002 |
| | | ES 2194722 T3 | 01-12-2003 |
| | | GB 2349644 A | 08-11-2000 |
| | | JP 2002542847 T | 17-12-2002 |
| | | PT 1175148 T | 29-08-2003 |
| WO 2007024973 A | 01-03-2007 | AU 2006283042 A1 | 01-03-2007 |
| | | CA 2620175 A1 | 01-03-2007 |
| | | EP 1928234 A1 | 11-06-2008 |
| WO 9729778 A | 21-08-1997 | AU 705101 B2 | 13-05-1999 |
| | | AU 1538997 A | 02-09-1997 |
| | | DE 69708461 D1 | 03-01-2002 |
| | | DE 69708461 T2 | 27-06-2002 |
| | | EP 0874643 A2 | 04-11-1998 |
| | | JP 2000505434 T | 09-05-2000 |
| WO 9933344 A | 08-07-1999 | AU 743620 B2 | 31-01-2002 |
| | | AU 1632899 A | 19-07-1999 |
| | | BR 9814570 A | 10-10-2000 |
| | | CA 2306106 A1 | 08-07-1999 |
| | | CN 1282216 A | 31-01-2001 |
| | | EP 1043931 A1 | 18-10-2000 |
| | | JP 2001527027 T | 25-12-2001 |
| | | OA 11437 A | 26-04-2004 |
| | | US 6054504 A | 25-04-2000 |
| US 3898336 A | 05-08-1975 | KEINE | |
| WO 03095431 A | 20-11-2003 | AU 2003232062 A1 | 11-11-2003 |
| | | US 2003220415 A1 | 27-11-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 406163 B
- GB 2134783 A
- EP 439699 B1
- WO 0185676 A1
- US 2005249695 A1